# EUROPÄISCHE PATENTSCHRIFT

(11) **EP 2 619 348 B1**
(45) Veröffentlichungstag und Bekanntmachung des Hinweises auf die Patenterteilung: **01.04.2015**
(21) Anmeldenummer: 11721560.8
(22) Anmeldetag: 27.05.2011
(51) Int. Cl.: C25D 5/10, C25D 7/10, F16C 9/00, F16C 33/10, C23C 28/02, C25D 3/30, C25D 3/32, C25D 15/00, C25D 15/02, F16C 33/12

(54) **SCHICHTVERBUNDWERKSTOFF FÜR GLEITELEMENTE, VERFAHREN ZU DESSEN HERSTELLUNG UND VERWENDUNG**
LAYERED COMPOSITE MATERIAL FOR SLIDING ELEMENTS, METHOD FOR PRODUCING SAME AND USE THEREOF
MATÉRIAU COMPOSITE STRATIFIÉ POUR ÉLÉMENTS DE GLISSEMENT, SON PROCÉDÉ DE FABRICATION ET SON UTILISATION

(30) Priorität: 09.09.2010 DE 102010040469
(43) Veröffentlichungstag der Anmeldung: 31.07.2013
(73) Patentinhaber: Federal-Mogul Wiesbaden GmbH, 65201 Wiesbaden (DE)
(72) Erfinder: STASCHKO, Klaus, 65232 Taunusstein (DE); MAGOMAJEW, Juri, 42651 Solingen (DE)
(74) Vertreter: Geyer, Werner
(86) Internationale Anmeldenummer: PCT/EP2011/058762
(87) Internationale Veröffentlichungsnummer: WO 2012/031792

(56) Entgegenhaltungen:
- EP-A1- 0 195 995
- EP-A2- 1 643 015
- DE-A1-102007 028 215
- DE-A1-102008 046 817
- DE-B3-102009 019 601
- US-A- 5 028 492
- US-A1- 2009 145 765

## Beschreibung

Die Erfindung bezieht sich auf einen Schichtverbundwerkstoff für Gleitelemente, insbesondere Gleitlager, umfassend eine auf die Oberfläche eines Gleitelements aufgebrachte Grundschicht aus einer Kupfer oder Aluminium enthaltenden Legierung und eine darüber befindliche Gleitschicht, wobei die Gleitschicht 90 - 99,6 Gew.% Zinn oder Zinnlegierung mit einem Zinnanteil von mehr als 60 Gew.-% und 0,2 - 6 Gew.% Feststoffschmierpartikel mit einer Mohs-Härte ≤ 3 und einer Korngröße ≤ 10 µm umfaßt. Ferner bezieht sich die Erfindung auf ein Verfahren zur Herstellung dieses Schichtverbundwerkstoffes sowie die Verwendung desselben.

Gleitelemente, die mechanischen Beanspruchungen in Form von Reibung ausgesetzt sind, beispielsweise Gleitlager für Verbrennungsmotoren, müssen über gute Gleiteigenschaften, ausreichende Härte, geringe Freßneigung und eine ausreichende Verschleißbeständigkeit sowie hohe Korrosionsbeständigkeit verfügen. Dazu können Gleitelemente, insbesondere deren Laufflächen, mit Gleitbeschichtungen aus Metallen oder Metallegierungen versehen werden. Diese Beschichtungen sollen einerseits eine ausreichende Duktilität aufweisen und eine geringe Versprödungsneigung zeigen, insbesondere unter Belastung und bei höheren Temperaturen, und andererseits über eine hohe innere Festigkeit verfügen, um den Belastungen Stand zu halten.

In der DE 197 54 221 A1 ist ein Schichtverbundwerkstoff beschrieben, dessen galvanisch aufgebrachte Gleitschicht unabhängig vom Kupfergehalt auch bei höheren Temperaturen keine Versprödung zeigt, wobei der Schichtverbundwerkstoff eine Gleitschicht mit 8-30 Gew.-% Kupfer, 60-97 Gew.% Zinn und 0,5-10 Gew.-% Kobalt aufweist.

In der DE 197 28 777 A1 wird ein Schichtverbundwerkstoff für Gleitlager beschrieben, dessen Gleitschicht aus einer bleifreien, Zinn und Kupfer aufweisenden Legierung besteht, wobei der Kupferanteil 3 bis 20 Gew.-% und der Zinnanteil 70 - 97 Gew.-% beträgt. Zur Verbesserung der Verschleißfestigkeit dieser Gleitschicht wird vorgeschlagen, Hartstoffteilchen aus Aluminiumoxid, Siliziumnitrid, Diamant, Titandioxid und/oder Siliziumcarbid in die Gleitschicht einzulagern.

In der DE 10 2009 019 601 B3 ist ein Schichtverbundwerkstoff für Gleitelemente beschrieben, umfassend eine auf die Oberfläche eines Gleitelements aufgebrachte Grundschicht aus einer Kupfer- oder Aluminiumlegierung und eine unmittelbar auf die Grundschicht aufgebrachte Gleitschicht, dadurch gekennzeichnet, daß die Gleitschicht 85 - 99,5 Vol.-% Kupfer oder Kupferiegierung und 0,5 - 15 Vol.-% Feststoffschmierpartikel mit einer Mohs-Härte ≤ 2 und einer Korngröße ≤ 10 µm umfaßt und keine Hartstoffpartikel mit einer Mohs-Härte ≥ 9 enthält.

Mit den oben beschriebenen Schichtverbundwerkstoffen lassen sich hoch belastbare und verschleißbeständige Gleitlager herstellen. Die Gleiteigenschaften dieser Schichtverbundwerkstoffe sind jedoch noch verbesserungsbedürftig.

Gleitschichten aus Zinn oder Zinnlegierungen haben gegenüber Gleitschichten aus Kupfer und Kupferlegierungen grundsätzlich den Vorteil, daß sie aufgrund ihrer geringeren Härte und höheren Duktilität sehr gute Gleiteigenschaften aufweisen. Andererseits ist die Festigkeit von Gleitschichten aus Zinn oder Zinnlegierungen für manche Anwendungen nicht ausreichend. Mit der in der DE 197 28 777 A1 vorgeschlagenen Lösung der Einlagerung von Hartstoffpartikeln kann wiederum die Verschleißfestigkeit bestimmter Gleitschichten erhöht werden, die Gleiteigenschaften und die Festigkeit sind aber noch verbesserungsbedürftig.

In der EP 1 643 015 A2 ist ein verzinntes Produkt beschrieben, umfassend ein Substrat und eine Beschichtung aus einem Verbundwerkstoff, der in einer Zinnschicht dispergierte Kohlenstoffpartikel enthält, wobei die Beschichtung auf dem Substrat ausgebildet ist und eine Dicke von 0,5 - 10.0 µm aufweist.

In der DE 10 2008 046 817 A1 ist ein beschichtetes Gleitelement beschrieben, insbesondere ein beschichtetes Gleitlager für Verbrennungsmotoren, mit einer Oberfläche, umfassend eine auf die Oberfläche aufgebrachte Metall- oder Metallegierungsschicht und eine darüber befindliche Reaktionsschicht, die ein anorganisches Reaktionsprodukt des Metalls oder der Metallegierung umfasst, wobei die Reaktionsschicht Feststoffpartikel mit einer Korngröße von 1-1000 nm enthält und die Reaktionsschicht eine Dicke von nicht mehr als 5 µm aufweist. Ferner ist ein Verfahren zur Herstellung des beschichteten Gleitelements beschrieben.

Die DE 10 2007 028 215 A1 beschreibt ein Verfahren zur Herstellung eines strukturiert beschichteten Gleitelements, bei dem Metall oder eine Metallegierung elektrolytisch auf dem Gleitelement abgeschieden wird und das elektrolytische Abscheiden in einem ersten Schritt zur Erzeugung einer ersten Schicht bei einer ersten Stromdichte erfolgt und anschließend zur Erzeugung einer darüber liegenden zweiten Schicht bei einer zweiten Stromdichte erfolgt, wobei die erste Stromdichte oberhalb einer maximalen Stromdichte liegt, bis zu der eine mikrostrukturfreie Schicht des Metalls oder der Metallegierung elektrolytisch abscheidbar ist und die zweite Stromdichte nicht höher als die maximale Stromdichte ist. Ferner wird ein strukturiert beschichtetes Gleitelement beschrieben.

In der US 5,028,492 A wird eine Verbundbeschichtung beschrieben, umfassend eine duktile Metallmatrix, die beispielsweise aus Zinn bestehen kann, und einer einheitlich dispergierten Polymerkomponente, die die Reibung reduziert.

Die EP 0 195 995 A1 beschreibt ein Verfahren zur Herstellung von Zinn-Graphit oder Zinn/Blei-Graphit-Schichten, bei dem wenigstens die Zinn-Schicht galvanisch abgeschieden wird und die Zinn-Graphit oder Zinn/Blei-Graphit-Schicht als Dispersionsüberzug in einem einzigen Arbeitsgang galvanisch erzeugt wird, wobei mit einem Galvanisierungsbad auf stark saurer Basis, in dem Graphitpulver mittels eines säurebeständigen Netzmittels dispergiert ist, und bei Temperaturen ≤ 35°C gearbeitet wird.

Der vorliegenden Erfindung liegt daher die Aufgabe zugrunde, einen Schichtverbundwerkstoff für Gleitelemente bereitzustellen, der hervorragende Gleiteigenschaften bei gleichzeitig hoher Festigkeit und Härte sowie eine gute Korrosionsbeständigkeit und geringe Freßneigung aufweist.

Erfindungsgemäß wird diese Aufgabe gelöst durch einen Schichtverbundwerkstoff für Gleitelemente, umfassend eine auf die Oberfläche eines Gleitelements aufgebrachte Grundschicht aus einer Kupfer oder Aluminium enthaltenden Legierung und eine darüber befindliche Gleitschicht, wobei die Gleitschicht 90 - 99,6 Gew.-% Zinn oder Zinnlegierung mit einem Zinnanteil von mehr als 60 Gew.-% und 0,2 - 6 Gew.-% Feststoffschmierpartikel mit einer Mohs-Härte ≤ 3 und einer Korngröße ≤ 10 µm umfaßt, wobei die Feststoffschmierpartikel eine Kombination aus Zinn(IV)sulfid-Partikeln und Graphitpartikeln, aus Zinn(IV)sulfid-Partikeln und Molybdän(IV)sulfid-Partikeln oder aus Graphitpartikeln und Molybdän(IV)sulfid-Partikeln sind.

Weiter wird diese Aufgabe gelöst durch ein Verfahren zur Herstellung eines Schichtverbundwerkstoffes für Gleitelemente, bei dem
(a) ein Gleitelement, umfassend eine auf die Oberfläche des Gleitelements aufgebrachte Grundschicht aus einer Kupfer oder Aluminium enthaltenden Legierung und gegebenenfalls einer darauf befindlichen metallischen Diffusionssperrschicht in einen wässrigen Elektrolyten eingebracht wird, der einen pH-wert ≤ 3 aufweist und Zinnionen, Feststoffschmierpartikel mit einer Mohs-Härte ≤ 3 und einer Korngröße ≤ 10 µm und gegebenenfalls Hartstoffpartikel mit einer Mohs-Härte ≥ 8 und einer Korngröße ≤ 5 µm enthält, wobei die Feststoffschmierpartikel eine Kombination aus Zinn(IV)sulfid-Partikeln und Graphitpartikeln, aus Zinn(IV)sulfid-Partikeln und Molybdän(IV)sulfid-Partikeln oder aus Graphitpartikeln und Molybdän(IV)sulfid-Partikeln sind und
(b) Bei einer Temperatur des Elektrolyten von 20-60°C und einer Stromdichte von 0,5 - 20 A/dm² elektrolytisch eine Gleitschicht abgeschieden wird, die 90 - 99,6 Gew.-% Zinn oder Zinnlegierung mit einem Zinnanteil von mehr als 60 Gew.-%, 0,2 - 6 Gew.-% Feststoffschmierpartikel mit einer Mohs-Härte ≤ 3 und einer Korngröße ≤ 10 µm und gegebenenfalls 0,2 - 4 Gew.-% Hartstoffpartikel mit einer Mohs-Härte ≥ 8 und einer Korngröße ≤ 5 µm umfaßt.

Aufgrund der geringeren Härte von Gleitschichten aus Zinn gegenüber solchen aus Kupfer war davon auszugehen, daß Gleitschichten aus Zinn keine weitere Unterstützung der Gleiteigenschaften, beispielsweise durch Feststoffschmierpartikel mit geringer Härte benötigen. Überraschenderweise wurde im Rahmen der vorliegenden Erfindung jedoch gefunden, daß durch die Einlagerung von Feststoffschmierpartikeln in Gleitschichten aus Zinn oder Zinnlegierungen mit einem hohen Zinnanteil von mehr als 60 Gew.-% die Härte und Festigkeit der Zinnschicht erhöht werden kann und zudem die Gleitfähigkeit verbessert wird. Die überraschende Erhöhung der Festigkeit ermöglicht es, die guten Gleiteigenschaften von Zinnschichten für Anwendungen nutzbar zu machen, bei denen eine erhöhte Festigkeit der Gleitschicht erforderlich ist. Darüber hinaus weist der erfindungsgemäße Schichtverbundwerkstoff eine hohe Korrosionsbeständigkeit, eine höhe Härte und eine geringe Freßneigung auf.

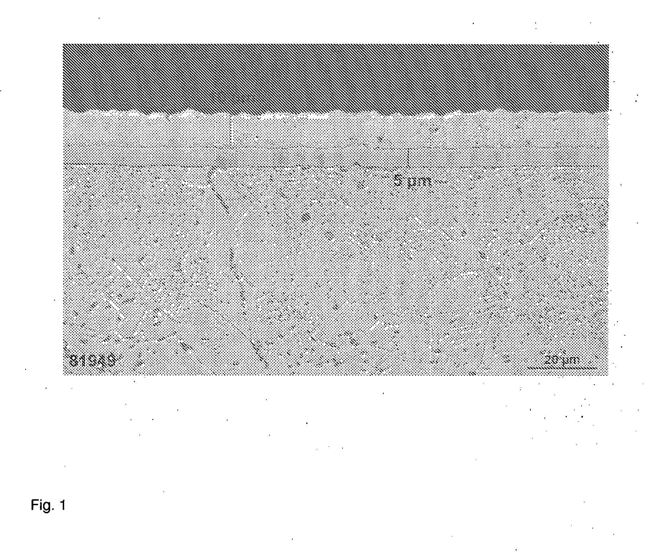

Figur 1 zeigt eine lichtmikroskopische Aufnahme des erfindungsgemäßen Schichtverbundwerkstoffs, auf der unten die Grundschicht aus einer Kupfer-Nickel-Silizium-Legierung, darüber eine Nickelschicht und darüber eine Gleitschicht aus Zinn mit SnS₂-Partikeln zu sehen sind.

Figur 2 zeigt eine rasterelektronenmikroskopische Aufnahme des erfindungsgemäßen Schichtverbundwerkstoffs, auf der links die Grundschicht aus einer Kupfer-Nickel-Silizium-Legierung und rechts daneben die auf der Grundschicht befindliche Gleitschicht aus Zinn mit Graphit- und SnS₂-Partikeln zu sehen sind.

Unter Gleitelementen werden im Sinne der Erfindung Elemente verstanden, die eine Gleitfläche zur gleitenden Anlage an eine Gegenfläche aufweisen. Erfindungsgemäß bevorzugte Gleitelemente sind Gleitlager, Buchsen, Zylinder, Kolben, Bolzen, Dichtungen, Ventile und Druckzylinder. Erfindungsgemäß besonders bevorzugte Gleitelemente sind Gleitlager, insbesondere Gleitlager für Verbrennungsmotoren, beispielsweise Kurbelwellenlager, Nockenwellenlager oder Pleuellager.

Ein Gleitlager weist in der Regel folgenden Schichtaufbau auf: Träger aus Stahl (Material des Gleitlagers), Grund- oder Lagermetallschicht (sogenanntes Substrat), gegebenenfalls eine Damm- oder Diffusionssperrschicht und eine Gleitschicht aus Metall oder einer Metallegierung. Die Lagermetallschicht kann beispielsweise eine Kupferlegierungsschicht, insbesondere eine gesinterte oder gegossene Kupferlegierungsschicht sein. Die Gleitschicht kann beispielsweise galvanisch aufgebracht werden.

Aufgrund der außergewöhnlich guten Gleiteigenschaften des erfindungsgemäßen Schichtverbundwerkstoffs ist dieser insbesondere für Gleitlager in Verbrennungsmotoren geeignet, bei denen Mangelschmierungen auftreten können, z.B. in modernen Kraftfahrzeugen mit Start-Stop-Automatik, da hier im Kurzstreckenbetrieb bei noch kalten Lagern und Schmierstoffen häufig der Motor abgestellt wird.

Die Grundschicht des erfindungsgemäßen Schichtverbundwerkstoffs besteht aus einer Kupfer oder Aluminium enthaltenden Legierung. Bevorzugte Legierungen sind Kupfer-Aluminium-, Kupfer-Aluminium-Eisen-, Kupfer-Zink-Aluminium-, Kupfer-Zinn-, Kupfer-Zink-, Kupfer-Zink-Silizium-, Kupfer-Nickel-Silizium-, Kupfer-Zinn-Nickel-, Aluminium-Zinn-, Aluminium-Zink- und Aluminium-Silizium-Legierungen. Die Schichtdicke der Grundschicht beträgt bevorzugt 300-600 µm. Die Grundschicht kann aufgegossen, chemisch oder galvanisch (elektrochemisch) aufgebracht werden.

Die Gleitschicht des erfindungsgemäßen Schichtverbundwerkstoffs, die elektrochemisch aufgebracht wird, umfaßt 90,0 - 99,6 Gew.% Zinn oder Zinnlegierung, wobei der Zinnanteil der Zinnlegierung mehr als 60 Gew.% beträgt, und 0,2 - 6 Gew.% Feststoffschmierpartikel, jeweils bezogen auf die Gesamtmasse der Gleitschicht. Bevorzugt umfaßt die Gleitschicht 91 - 99,3 Gew.% Zinn oder Zinnlegierung mit einem Zinnanteil von mehr als 60 Gew.-% und 0,5 - 5 Gew.% Feststoffschmierpartikel, besonders bevorzugt sind 93 - 99,0 Gew.-% Zinn oder Zinnlegierung mit einem Zinnanteil von mehr als 60 Gew.-% und 0,8-3 Gew.-% Feststoffschmierpartikel. Ein eventuell verbleibender Anteil kann unter anderem von Hartstoffpartikeln gebildet werden, die unten näher beschrieben sind. Diese Gewichtsanteile haben sich als besonders vorteilhaft für eine gute Balance zwischen Festigkeit und Gleitfähigkeit des erfindungsgemäßen Schichtverbundwerkstoffs erwiesen.

In einer besonders bevorzugten Ausführungsform umfaßt die Gleitschicht Zinn. Sofern Zinnlegierungen eingesetzt werden, sind unter diesen wiederum solche mit einem Gewichtsanteil des Zinns von mehr als 80 Gew.-%, insbesondere mehr als 95 Gew.-%, bevorzugt. Geeignete Zinnlegierungen sind insbesondere Zinn-Nickel-, Zinn-Antimon-, Zinn-Wismut-, Zinn-Eisen, Zinn-Blei-, Zinn-Zink und Zinn-Silber-Legierungen. Weiter bevorzugt umfaßt die Gleitschicht keine Zinn-Kupfer-Legierung.

Am meisten bevorzugt besteht die Gleitschicht des erfindungsgemäßen Schichtverbundwerkstoffs aus Zinn oder einer Zinnlegierung mit einem Zinnanteil von mehr als 60 Gew.-%, den Feststoffschmierpartikeln und gegebenenfalls Hartstoffpartikeln, jeweils mit den oben angegebenen Mengen und Größen der Feststoffschmierpartikel und gegebenenfalls Hartstoffpartikel. In einer Ausführungsform kann somit die Gleitschicht des erfindungsgemäßen Schichtverbundwerkstoffs aus 94 - 99,8 Gew.% Zinn oder Zinnlegierung, wobei die Zinnlegierung einen Zinnanteil von mehr als 60 Gew.% aufweist, und 0,2-6 Gew.% Feststoffschmierpartikeln mit einer Mohs-Härte ≤ 3 und einer Korngröße ≤ 10 µm bestehen und in einer anderen Ausführungsform kann die Gleitschicht aus 90 - 99,6 Gew.-% Zinn oder Zinnlegierung, wobei die Zinklegierung einen Zinnanteil von mehr als 60 Gew.-% aufweist, 0,2 - 6 Gew.% Feststoffschmierpartikeln mit einer Mohs-Härte ≤ 3 und einer Korngröße ≤ 10 µm und 0,2 - 4 Gew.-% Hartstoffpartikeln mit einer Mohs-Härte ≥ 8 und einer Korngröße ≤ 5 µm bestehen.

Die in der Gleitschicht enthaltenen Feststoffschmierpartikel sind Partikel, die im Gleitbetrieb zwischen den Gleitpartnern eine schmierende und damit die Gleiteigenschaften verbessernde Wirkung entfalten, wofür unter anderem eine geringe Härte der Partikel erforderlich ist. Grundsätzlich sind Partikel mit einer Härte nach Mohs bis etwa 3 geeignet. Die erfindungsgemäße Gleitschicht enthält daher Feststoffschmierpartikel mit einer Mohs-Härte ≤ 3, sogenannte Weichpartikel. Bevorzugt enthält die Gleitschicht Feststoffschmierpartikel mit einer Mohs-Härte von ≤ 2.

Die Mohs-Härte wird nach der im Stand der Technik bekannten Härteprüfung nach Mohs bestimmt, bei der die Härte durch die Ritzbarkeit eines Materials durch ein anderes ermittelt wird. Über diese Ritzbarkeit bzw. Ritzhärte wurde die Mohs-Skala erstellt, in der Talk die Härte 1, Gips die Härte 2, Kalkspat die Härte 3, Flußspat die Härte 4, Apatit die Härte 5, Feldspat die Härte 6, Quarz die Härte 7, Topas die Härte 8, Korund die Härte 9 und Diamant die Härte 10 aufweisen. Wenn sich ein Testmaterial von einem Material der Mohs-Skala nicht ritzen läßt, so ist seine Härte größer oder gleich der des Materials der Skala. Läßt sich ein Testmaterial von einem Material der Skala ritzen, so hat es eine geringere Härte. Die gleiche Härte liegt vor, wenn ein Testmaterial eines der aufgeführten Materialien der Mohs-Skala nicht ritzt und von diesem auch nicht geritzt werden kann. Wenn ein Testmaterial ein Skalenmaterial ritzt und selbst nicht von dem betreffenden Material sondern erst von dem nächsthöheren Material der Skala geritzt wird, so liegt die Härte des Testmaterials zwischen den Härten der beiden Materialien der Skala, was mit der Nachkommastelle 5 angegeben wird.

Die Gleitschicht des erfindungsgemäßen Schichtverbundwerkstoffs enthält als Feststoffschmierpartikel eine Kombination aus Zinn(IV)sulfid-Partikeln und Graphitpartikeln, aus Zinn(IV)sulfid-Partikeln und Molybdän(IV)sulfid-Partikeln oder aus Graphitpartikeln und Molybdän(IV)sulfid-Partikeln.

Die Korngröße der Feststoffschmierpartikel beträgt maximal 10 µm, bevorzugt maximal 8 µm, insbesondere 0,1 bis 6 µm, da so hervorragende Gleiteigenschaften erhalten werden können, während die Festigkeit der Gleitschicht hoch bleibt.

Die Gleitschicht weist vorzugsweise eine Schichtdicke von 2 - 18 µm, insbesondere 3 - 13 µm auf. Bei diesen Starken kann eine sehr gute Strukturfestigkeit der partikelhaltigen Gleitschicht erzielt werden.

In einer weiteren bevorzugten Ausführungsform enthält die Gleitschicht des erfindungsgemäßen Schichtverbundwerkstoffs zusätzlich Hartstoffpartikel mit einer Mohs-Härte ≥ 8, insbesondere ≥ 9, mit einer Korngröße ≤ 5 µm, da so zusätzlich die Verschleißfestigkeit der Gleitschicht verbessert werden kann. Der Anteil der Hartstoffpartikel beträgt vorzugsweise 0,2 - 4 Gew.-%, bevorzugt 0,3 - 3,5 Gew.-%, insbesondere 0,4 - 3 Gew.-%. In diesen Mengen läßt sich zusammen mit den Feststoffschmierpartikeln und den genannten Korngrößen ein optimales Verhältnis zwischen Verschleißfestigkeit und Gleitfähigkeit erreichen, wobei die verbesserte Festigkeit der Gleitschicht erhalten bleibt. Bevorzugt werden als Hartstoffpartikel aus Wolframkarbid, Chromkarbid, Aluminiumoxid, Siliziumkarbid, Siliziumnitrid, kubischem Bornitrid, Borkarbid und/oder Diamant eingesetzt.

Die Korngröße der Hartstoffpartikel liegt bevorzugt im Bereich von 0,1 bis 5 µm, insbesondere im Bereich von 0,2 bis 3 µm. Besonders geeignet sind als Feststoffpartikel Diamanten und unter diesem wiederum sind solche mit einer Größe im Bereich von 0,2 bis 0,5 µm. Ferner sind Aluminiumoxid-Partikel mit einer Partikelgröße im Bereich von etwa 0,2 bis 5 µm bevorzugt. Eingelagerte Diamantpartikel können aus mono- und/oder polykristallinem Diamant gebildet sein. Die Feststoffschmierpartikel und die Hartstoffpartikel können jeweils unabhängig voneinander Mischungen von Partikeln verschiedener Stoffarten in Kombination sein.

Die Gleitschicht des erfindungsgemäßen Schichtverbundwerkstoffs kann unmittelbar auf die Grundschicht aufgebracht sein, so daß sich zwischen Grund- und Gleitschicht keine weitere Schicht befindet oder es kann sich zwischen Grund- und Gleitschicht mindestens eine metallische Diffusionssperrschicht befinden, bevorzugt aus Kobalt, Nickel, einer Zinn-Nickel-Legierung oder einer Kombination aus einer Nickelschicht und einer Zinn-Nickel-Legierungsschicht. Die Diffusionssperrschicht schränkt die Diffusion von Metallatomen zwischen Grund- und Gleitschicht ein und vermeidet auf diese Weise Eigenschaftsveränderungen des Schichtverbundwerkstoffs, insbesondere im Betrieb eines entsprechend beschichteten Gleitelements bei erhöhten Temperaturen.

Auf den erfindungsgemäßen Schichtverbundwerkstoff kann zusätzlich noch eine Metallschicht als Einlaufschicht aufgebracht werden, die das Einlaufen des Gleitelements erleichtert. Bevorzugte Einlaufschichten sind Indium-, Zink-, Zinn-, Indiumlegierungs-, Zinklegierungs-, Zinnlegierungs-Schichten, insbesondere Zink-, Glanzzinn- und Indiumschichten.

Die Schichtdicke der Einlaufschicht beträgt vorzugsweise 2 - 15 µm, insbesondere 3 - 6 µm, abhängig von der Verschleißfestigkeit der Einlaufschicht und dem Einsatzzweck des Gleitelements.

In einer bevorzugten Ausführungsform der Erfindung besteht der Schichtverbundwerkstoff aus der Grundschicht, gegebenenfalls einer oder mehreren metallischen Diffusionssperrschicht(en) und der Gleitschicht oder aus der Grundschicht, gegebenenfalls einer oder mehreren metallischen Diffusionssperrschicht(en), der Gleitschicht und der Einlaufschicht.

Zur Herstellung des erfindungsgemäßen Schichtverbundwerkstoffs wird das Gleitelement, umfassend den Träger und die darauf aufgebrachte Grundschicht sowie gegebenenfalls eine metallische Diffusionssperrschicht in einen wäßrigen Elektrolyten eingebracht, als Kathode geschaltet und auf die Grundschicht elektrolytisch die oben beschriebene, Schmierstoffpartikelhaltige Gleitschicht abgeschieden.

Unter einem Elektrolyten wird im Sinne der Erfindung eine wäßrige Lösung verstanden, deren elektrische Leitfähigkeit durch elektrolytische Dissoziation der Elektrolytzusätze in Ionen zustande kommt. Der Elektrolyt enthält Zinnionen und gegebenenfalls weitere Metallionen zur Ausbildung einer Zinnlegierung und darüber hinaus die dem Fachmann bekannten üblichen Elektrolysehilfsmittel, wie beispielsweise Säuren und Salze sowie als Rest Wasser.

Der Elektrolyt enthält bevorzugt 5 - 100 g/l, insbesondere 5 - 50 g/l Zinn in Ionenform, beispielsweise als Zinn(II)methansulfonät zugesetzt, und gegebenenfalls weitere Metalle in Ionen- bzw. Salzform als Legierungselemente.

Die Feststoffschmierpartikel und gegebenenfalls Hartstoffpartikel können während der galvanischen Abscheidung in der Schwebe gehalten werden, beispielsweise durch Rühren. In einer bevorzugten Ausführungsform werden dem Elektrolyten zusätzlich ein Netzmittel und ein Suspensionsstabilisator zugefügt, die als Hilfsmittel dienen, um eine Aggregation und Clusterbildung der Partikel zurück zu drängen und den Einbau der Partikel in die Gleitschicht zu erleichtern. Als Netzmittel haben sich Alkylarylether, insbesondere Alkylnaphthylether und als Suspensionsstabilisatoren haben sich anionische Tenside, insbesondere Ethersulfate, d.h. Verbindungen, die mindestens eine Ethergruppe und mindestens eine Sulfatgruppe enthalten, als besonders günstig erwiesen. Das Netzmittel liegt vorzugsweise in einer Menge von 8 - 120 ml/l, insbesondere 3 - 80 ml/l, bezogen auf das Gesamtvolumen des Elektrolyten, vor. Der Suspensionsstabilisator liegt vorzugsweise in einer Menge von 0,3 - 50 ml/l, insbesondere 1 - 15 ml/l vor.

Die Menge an Feststoffschmierpartikeln und gegebenenfalls Hartstoffpartikeln, die in dem Elektrolyt enthalten ist, kann in weiten Bereichen variiert werden und ist neben dem einzubauenden Anteil auch von der Abscheidungswilligkeit der jeweiligen Partikel abhängig. Dabei hat es sich als vorteilhaft erwiesen, daß in dem Elektrolyten jeweils 10 - 100 g/l Feststoffschmierpartikel und Hartstoffpartikel enthalten sind. Besonders bevorzugt sind jeweils 20 - 50 g/l und am meisten bevorzugt jeweils 30 - 35 g/l Feststoffschmierpartikel und Hartstoffpartikel im Elektrolyten enthalten.

In einer bevorzugten Ausführungsform der Erfindung wird ein saurer Elektrolyt eingesetzt, insbesondere mit einem pH-Wert ≤ 3, vorzugsweise mit einem pH-Wert von 1-2. Als besonders günstig hat sich ein Elektrolyt erwiesen, der ein oder mehrere Alkylsulfonsäuren, insbesondere mit 1 - 4 C-Atomen, enthält. Methansulfonsäure, Ethansulfonsäure, Methandisulfonsäure und Ethandisulfonsäure sind bevorzugte Alkylsulfonsäuren, insbesondere Methansulfonsäure. Weiter ist es bevorzugt, daß der Elektrolyt frei von Cyanid ist, worunter im Sinne der Erfindung verstanden wird, daß der Elektrolyt weniger als 0,1 g/l Cyanidionen enthält. Bevorzugt sind weniger als 0,01 g/l Cyanidionen.

Für die elektrolytische Abscheidung sind Temperaturen des Elektrolyten von etwa 20 - 60°C geeignet, wobei Temperaturen von 25 - 35°C bevorzugt sind. Die Abscheidung erfolgt in der Regel bei Stromdichten von etwa 0,5 - 20 A/dm², wobei Stromdichten von etwa 2-4 A/dm² bevorzugt sind.

Die vorliegende Erfindung bezieht sich ferner auf einen Schichtverbundwerkstoff, der nach dem erfindungsgemäßen Verfahren erhältlich ist. Weiter bezieht sich die vorliegende Erfindung auf die Verwendung des erfindungsgemäßen Schichtverbundwerkstoffs für Gleitlager, insbesondere Kurbelwellenlager, Nockenwellenlager oder Pleuellager für Verbrennungsmotoren.

Die bei dem erfindungsgemäßen Schichtverbundwerkstoff beschriebenen, geeigneten, bevorzugten und besonders bevorzugten Ausgestaltungen sind bei dem erfindungsgemäßen Verfahren und der Verwendung ebenfalls geeignet, bevorzugt und besonders bevorzugt.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Das nachfolgende Beispiel erläutert die Erfindung.

Es wird ein wäßriger Elektrolyt folgender Zusammensetzung hergestellt:

| | |
|---|---|
| Sn²⁺-Gehalt (als Zinn(II)-methansulfonat zugesetzt) | 35 g/l |
| Graphitpartikel (Korngröße ≤ 10 µm) | 30 g/l |
| Zinn(IV)sulfid-Partikel (Korngröße ≤ 10 µm) | 30 g/l |
| Netzmittel (Alkylnaphthylether) | 90 ml/l |
| Suspensionsstabilisator (Ethersulfat) | 15 ml/l |

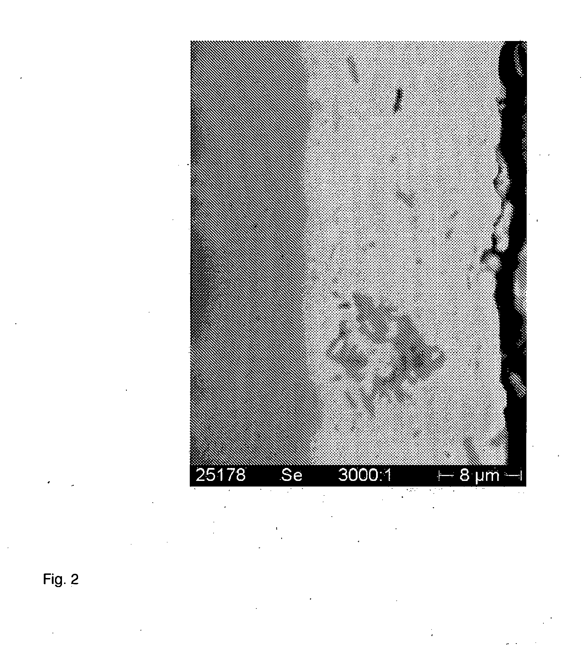

Der pH-Wert des Elektrolyten wird mit Methansulfonsäure auf etwa 1,5 eingestellt. Ein Gleitlager mit einer Kupfer-Nickel-Silizium-Legierung als Grundschicht und einer darüber aufgebrachten Nickelschicht wurde in den Elektrolyten eingebracht, als Kathode geschaltet und das Gleitlager bei 30 °C für 9 Minuten bei einer Stromdichte von 3,5 A/dm² beschichtet, wobei eine Schichtdicke von 10 µm abgeschieden wurde. Der erhaltene Schichtverbundwerkstoff ist in Figur 2 gezeigt. Die Analyse ergab, daß die Gleitschicht 0,85 Gew.% Zinn(IV)sulfid-Partikel und 1,3 Gew.% Graphitpartikel enthielt.

Zum Vergleich wurde eine reine Zinnschicht ohne Feststoffpartikel nach dem gleichen Verfahren hergestellt.

Im Vergleich zu einer herkömmlichen Gleitlagerbeschichtung aus Zinn mit einer Feststoffschmierpartikel-freien Gleitschicht zeigte das Gleitlager mit Zinn(IV)sulfid-Partikeln und Graphitpartikeln eine verbesserte Gleitfähigkeit (Reibwert 0,05 gegenüber 0,1 bis 0,2 der partikelfreien Zinnschicht) und eine deutlich verbesserte Festigkeit (Vickers-Härte von 23 HV 0,01 gegenüber 8 HV 0,01 der partikelfreien Zinnschicht, bestimmt mit dem Gerät Metallux von Leica, Prüfdruck 0,01 Kilopond), sowie eine gute Verschleißbeständigkeit und geringe Freßneigung.

## Patentansprüche

1. Schichtverbundwerkstoff für Gleitelemente, umfassend eine auf die Oberfläche eines Gleitelements aufgebrachte Grundschicht aus einer Kupfer oder Aluminium enthaltenden Legierung und eine darüber befindliche Gleitschicht **dadurch gekennzeichnet daß** die Gleitschicht 90 - 99,6 Gew.-% Zinn oder Zinnlegierung mit einem Zinnanteil von mehr als 60 Gew.-% und 0,2 - 6 Gew.% Feststoffschmierpartikel mit einer Mohs-Härte ≤ 3 und einer Korngröße ≤ 10 µm umfaßt, wobei die Feststoffschmierpartikel eine Kombination aus Zinn(IV)sulfid-Partikeln und Graphitpartikeln, aus Zinn(IV)sulfid-Partikeln und Molybdän(IV)sulfid-Partikeln oder aus Graphitpartikeln und Molybdän(IV)sulfid-Partikeln sind.

2. Schichtverbundwerkstoff gemäß Anspruch 1, **dadurch gekennzeichnet, daß** die Gleitschicht zusätzlich 0,2 - 4 Gew.-% Hartstoffpartikel mit einer Mohs-Härte ≥ 8 und einer Korngröße ≤ 5 µm enthält.

3. Schichtverbundwerkstoff gemäß Anspruch 1 oder 2, **dadurch gekennzeichnet, daß** die Gleitschicht aus 90 - 99,6 Gew.-% Zinn oder Zinnlegierung mit einem Zinnanteil von mehr als 60 Gew.-%. 0.2 - 6 Gew.-% Feststoffschmierpartikeln mit einer Mohs-Härte ≤ 3 und einer Korngröße ≤ 10 µm und gegebenenfalls 0,2 - 4 Gew.-% Hartstoffpartikeln mit einer Mohs-Härte ≥ 8 und einer Korngröße ≤ 5 µm besteht.

4. Schichtverbundwerkstoff gemäß Anspruch 2 oder 3, **dadurch gekennzeichnet, daß** die Hartstoffpartikel gewählt sind aus der Gruppe bestehend aus Wolframkarbid, Chromkarbid, Aluminiumoxid, Siliziumkarbid, Siliciumnitrid, kubischem Bornitrid, Borkarbid und Diamant

5. Schichtverbundwerkstoff gemäß einem der Ansprüche 1 bis 4, **dadurch gekennzeichnet, daß** sich zwischen Grundschicht und Gleitschicht eine metallische Diffusionssperrschicht befindet und/oder auf der Gleitschicht zusätzlich eine metallische Einlaufschicht aufgebracht ist

6. Verfahren zur Herstellung eines Schichtverbundwerkstoffes für Gleitelemente nach einem der Ansprüche 1 bis 5, umfassend die Schritte, daß
(a) ein Gleitelement, umfassend eine auf die Oberfläche des Gleitelements aufgebrachte Grundschicht aus einer Kupfer oder Aluminium enthaltenden Legierung und gegebenenfalls einer darauf befindlichen metallischen Diffusionssperrschicht in einen wässrigen Elektrolyten eingebracht wird, der einen pH-Wert **≤** 3 aufweist und Zinnionen, Feststoffschmierpartikel mit einer Mohs-Härte ≤ 3 und einer Korngröße ≤ 10 µm und gegebenenfalls Hartstoffpartikel mit einer Mohs-Härte ≥ 8 und einer Korngröße ≤ 5 µm enthält, wobei die Feststoffschmierpartikel eine Kombination aus Zinn(IV)sulfid-Partikeln und Graphitpartikeln, aus Zinn(IV)sulfid-Partikeln und Molybdän(IV)sulfid-Partikeln oder aus Graphitpartikeln und Molybdän(IV)sulfid-Partikeln sind und
(b) bei einer Temperatur des Elektrolyten von 20 - 60 °C und einer Stromdichte von 0,5 - 20 A/dm² elektrolytisch die Gleitschicht abgeschieden wird.

7. Verfahren nach Anspruch 6, **dadurch gekennzeichnet, daß** der Elektrolyt mindestens eine Alkylsulfonsäure, einen Alkylarylether und ein Ethersulfat enthält

8. Verwendung des Schichtverbundwerkstoffs gemäß einem der Ansprüche 1 bis 5 für Gleitlager, insbesondere Kurbelwellenlager, Nockenwellenlager oder Pleuellager.

## Claims

1. Layered composite material for sliding elements comprising a base layer, applied to the surface of a sliding element, made of an alloy containing copper or aluminium and a sliding layer arranged above said base layer, **characterized in that** the sliding layer comprises 90 - 99.6 wt.-% tin or tin alloy having a tin proportion of more than 60 wt.-% and 0.2 - 6 wt.-% solid lubricant particles having a Mohs hardness of ≤ 3 and a particle size of s 10 µm, wherein the solid lubricant particles are a combination of tin(IV)sulfide particles and graphite particles, of tin(IV)sulfide particles and molybdenum(IV)sulfide particles or of graphite particles and molybdenum(IV)sulfide particles.

2. Layered composite material according to claim 1, **characterized in that** the sliding layer additionally contains 0.2 - 4 wt.-% hard-material particles having a Mohs hardness of ≥ 8 and a particle size of ≤ 5 µm.

3. Layered composite material according to claim 1 or 2, **characterized in that** the sliding layer consists of 90 - 99.6 wt.-% tin or tin alloy having a tin proportion of more than 60 wt.-%, 0.2 - 6 wt.-% solid lubricant particles having a Mohs hardness of ≤ 3 and a particle size of ≤ 10 µm and optionally 0.2 - 4 wt.-% hard-material particles having a Mohs hardness of ≥ 8 and a particle size of ≤ 5 µm.

4. Layered composite material according to claim 2 or 3, **characterized in that** the hard-material particles are selected from the group consisting of tungsten carbide, chromium carbide, aluminium oxide, silicon carbide, silicon nitride, cubic boron nitride, boron carbide and diamond.

5. Layered composite material according to one of claims 1 to 4, **characterized in that** there is a metallic diffusion-barrier layer between base layer and sliding layer, and/or a metallic run-in layer is additionally applied to the sliding layer.

6. Method for producing a layered composite material for sliding elements according to one of claims 1 to 5, comprising the steps that
(a) a sliding element comprising a base layer, applied to the surface of the sliding element, made of an alloy containing copper or aluminium and optionally a metallic diffusion-barrier layer arranged thereon is introduced into an aqueous electrolyte which has a pH of ≤ 3 and contains tin ions, solid lubricant particles having a Mohs hardness of ≤ 3 and a particle size of ≤ 10 µm and optionally hard-material particles having a Mohs hardness of ≥ 8 and a particle size of ≤ 5 µm, wherein the solid lubricant particles are a combination of tin(IV)sulfide particles and graphite particles, of tin(IV)sulfide particles and molybdenum(IV)sulfide particles or of graphite particles and molybdenum(IV)sulfide particles and
(b) the sliding layer is electrodeposited at a temperature of the electrolyte of 20 - 60°C and a current density of 0.5 - 20 A/dm².

7. Method according to claim 6, **characterized in that** the electrolyte contains at least an alkyl sulfonic acid, an alkyl aryl ether and an ether sulfate.

8. Use of the layered composite material according to one of claims 1 to 5 for sliding bearings, in particular crankshaft bearings, camshaft bearings or connecting rod bearings.

## Revendications

1. Matériau composite stratifié pour éléments de glissement, comprenant une couche de base appliquée sur la surface d'un élément de glissement, en un alliage contenant du cuivre ou de l'aluminium, et une couche de glissement disposée par-dessus, **caractérisé en ce que** la couche de glissement comprend 90-99,6 % en poids d'étain ou d'un alliage d'étain ayant une proportion d'étain supérieure à 60 % en poids, et 0,2-6 % en poids de particules lubrifiantes solides ayant une dureté Mohs ≤ 3 et une granulométrie ≤ 10 µm, les particules lubrifiantes solides étant une combinaison de particules de sulfure d'étain(IV) et de particules de graphite, de particules de sulfure d'étain(IV) et de particules de sulfure de molybdène(IV), ou de particules de graphite et de particules de sulfure de molybdène(IV).

2. Matériau composite stratifié selon la revendication 1, **caractérisé en ce que** la couche de glissement contient en outre 0,2-4 % en poids de particules dures ayant une dureté Mohs ≥ 8 et une granulométrie ≤ 5 µm.

3. Matériau composite stratifié selon la revendication 1 ou 2, **caractérisé en ce que** la couche de glissement est constituée de 90-99,6 % en poids d'étain ou d'un alliage d'étain ayant une proportion d'étain supérieure à 60 % en poids, de 0,2-6 % en poids de particules lubrifiantes solides ayant une dureté Mohs ≤ 3 et une granulométrie ≤ 10 µm, et éventuellement de 0,2-4 % en poids de particules dures ayant une dureté Mohs ≥ 8 et une granulométrie ≤ 5 µm.

4. Matériau composite stratifié selon la revendication 2 ou 3, **caractérisé en ce que** les particules dures sont choisies dans le groupe consistant en le carbure de tungstène, le carbure de chrome, l'oxyde d'aluminium, le carbure de silicium, le nitrure de silicium, le nitrure de bore cubique, le carbure de bore et le diamant.

5. Matériau composite stratifié selon l'une des revendications 1 à 4, **caractérisé en ce qu'**une couche métallique formant barrière de diffusion se trouve entre la couche de base et la couche de glissement, et/ou qu'une couche métallique de rodage est appliquée en outre sur la couche de glissement.

6. Procédé de fabrication d'un matériau composite stratifié pour éléments de glissement selon l'une des revendications 1 à 5, comprenant les étapes selon lesquelles
(a) un élément de glissement, comprenant une couche de base, appliquée sur la surface de l'élément de glissement, en un alliage contenant du cuivre ou de l'aluminium, et éventuellement une couche métallique formant barrière de diffusion disposée par-dessus, est introduit dans un électrolyte aqueux qui présente un pH ≤ 3 et qui contient des ions étain, des particules lubrifiantes solides ayant une dureté Mohs ≤ 3 et une granulométrie ≤ 10 µm et éventuellement des particules dures ayant une dureté Mohs ≥ 8 et une granulométrie ≤ 5 µm, les particules lubrifiantes solides étant une combinaison de particules de sulfure d'étain(IV) et de particules de graphite, de particules de sulfure d'étain(IV) et de sulfure de molybdène(IV), ou de particules de graphite et de particules de sulfure de molybdène(IV), et
(b) la couche de glissement est déposée par dépôt électrolytique à une température de l'électrolyte de 20-60°C pour une densité de courant de 0,5-20 A/dm².

7. Procédé selon la revendication 6, **caractérisé en ce que** l'électrolyte contient au moins un acide alkylsulfonique, un alkylaryléther et un éthersulfate.

8. Utilisation d'un matériau composite stratifié selon l'une des revendications 1 à 5 pour des paliers lisses, en particulier des paliers de vilebrequin, des paliers d'arbre à cames ou des coussinets de bielle.
